# EUROPEAN PATENT APPLICATION

(11) **EP 4 471 406 A1**
(43) Date of publication of application: **04.12.2024**
(21) Application number: 23196252.3
(22) Date of filing: 08.09.2023
(51) Int. Cl.: G01N 21/41, G01N 21/43, G01N 21/03, G01N 21/552

(54) **DETECTION TUBE, DETECTION SYSTEM AND OPTICAL DETECTION METHOD FOR PARAMETER OF TEST SPECIMEN**

(30) Priority: 30.05.2023 TW 112120056
(71) Applicant: SKYLA Corporation, Hsinchu City 30044 (TW)
(72) Inventor: HUANG, Chua-Zu, 30044 Hsinchu City (TW)
(74) Representative: Becker, Eberhard

(57) **Abstract**

A detection tube (100, 100a) includes a main body (110) and an optical structure (120, 120a). The main body (110) includes a bottom wall (112) and a side wall (114) extending from a periphery of the bottom wall (112) to a first direction (D1), and the side wall (114) and the bottom wall (112) jointly form a detection groove (116). The optical structure (120, 120a) is connected to the bottom wall (112), the optical structure (120, 120a) includes an incident surface (122) and an exit surface (124), the incident surface (122) and the exit surface (124) are extending from the periphery of the bottom wall (112) to a second direction (D2) opposite to the first direction (D1). A first distance (H1) between portions of the incident surface (122) and the exit surface (124) adjacent to the bottom wall (112) is greater than a second distance (H2) between portions of the incident surface (122) and the exit surface (124) away from the bottom wall (112).

## Description

### BACKGROUND OF THE INVENTION

### Field of the Invention

The invention relates to a detection tube, a detection system, and an optical detection method, and especially an optical detection method for obtaining a parameter of a test specimen using a detection tube and a detection system with optics.

### Description of Related Art

In the field of biomedical testing, urine specific gravity is a routine test item for urine samples, and urine specific gravity refers to the ratio of the weight of water to the weight of urine under same volume at 4 degrees Celsius, and the higher the concentration of urine is, the higher the specific gravity of urine is. The optical refractometer and the chemical colorimetric test paper are two common ways to be applied in routine urine specific gravity detection. Since the refractive index of the urine has positive relationship with the urine specific gravity, the refractive index of urine can be measured by the optical refractometer and the urine specific gravity can be estimated. Therefore, compared with the colorimetric test paper which defines the urine specific gravity by several color intervals, the value of the urine specific gravity obtained from optical method is much more precise.

Commercial optical refractometers are widely used for measuring the refractive index of solutions and typically require calibration with pure water. The general operating procedure involves calibrating with pure water, removing the water, cleaning optical measuring surface of the refractometer, and then measuring the refractive index of the specimen solution. If there are more specimen solutions to be detected, cleaning procedure needs to be done repeatedly and carefully to make sure the correct solution is measured. In biomedical field, whether doing calibration or doing multiple measurements, users need to repeatedly do the cleaning to prevent cross-contamination while be careful not to scratch the optical surface to prevent measurement inaccuracies or even device damage. Therefore, a detection tube with no cleaning procedures needed can simplify the complicated detection process and reduce the risk of damages.

### SUMMARY OF THE INVENTION

The invention provides a detection tube, a detection system having the detection tube, and an optical detection method for a parameter of a test specimen adopting the detection system that may effectively improve the usability and the simplicity.

A detection tube of the invention includes a main body and an optical structure. The main body includes a bottom wall and a side wall extending from a periphery of the bottom wall to a first direction, and the side wall and the bottom wall jointly form a detection groove. The optical structure is connected to the bottom wall, the optical structure includes an incident surface and an exit surface, the incident surface and the exit surface are extended from the periphery of the bottom wall to a second direction opposite to the first direction, there is a first distance between portions of the incident surface and the exit surface adjacent to the bottom wall, there is a second distance between portions of the incident surface and the exit surface away from the bottom wall, and the first distance is greater than the second distance.

In an embodiment of the invention, an included angle between the incident surface and the bottom wall or between and the exit surface and the bottom wall is between 64 degrees and 80 degrees.

In an embodiment of the invention, the optical structure is solid, and a refractive index thereof is greater than 1.4.

In an embodiment of the invention, the optical structure further includes a connecting surface, and the connecting surface connects the incident surface and the exit surface at their ends away from the bottom wall.

A detection system of the invention includes a housing, a light source, a detection tube, and a sensing component. The housing shields external light. The light source is arranged in the housing. The detection tube is detachably disposed in the housing and includes a main body and an optical structure. The main body includes a bottom wall and a side wall extending from a periphery of the bottom wall to a first direction, and the side wall and the bottom wall jointly form a detection groove. The optical structure is connected to the bottom wall, the optical structure includes an incident surface and an exit surface, the incident surface and the exit surface are extended from the periphery of the bottom wall to a second direction opposite to the first direction, there is a first distance between portions of the incident surface and the exit surface adjacent to the bottom wall, there is a second distance between portions of the incident surface and the exit surface away from the bottom wall, and the first distance is greater than the second distance. The sensing component is arranged in the housing and the sensing component is arranged adjacent to the exit surface to receive a light exiting from the exit surface. The light source is arranged adjacent to the incident surface.

In an embodiment of the invention, the sensing component is a fixed sensor or a movable sensor or includes a first optical sensor and a second optical sensor.

In an embodiment of the invention, the light source includes a light-emitting diode or a laser light source.

In an embodiment of the invention, the detection system further includes a reflecting mirror, and the sensing component receives the light exiting from the exit surface via the reflecting mirror.

An optical detection method for a parameter of a test specimen of the invention includes: providing a detection system; emitting a light via the light source toward the incident surface, wherein the light enters the optical structure from the incident surface, a portion of the light is reflected by the bottom wall and exits from the exit surface to form a first light, the first light reaches to a first position, and the sensing component receives the first light to obtain initial information; filling a test specimen into the detection groove; emitting a light via the light source toward the incident surface, the light enters the optical structure from the incident surface, a portion of the light is reflected by the bottom wall and the test specimen and exits from the exit surface to form a second light, the second light reaches to a second position, and the sensing component receives the second light to obtain detection information; and comparing the initial information and the detection information to calculate a refractive index of the test specimen.

In an embodiment of the invention, the optical detection method for the parameter of the test specimen further includes obtaining specific gravity information of the test specimen from a reference table of the refractive index and respective specific gravity of the specimen.

In an embodiment of the invention, the sensing component includes a first optical sensor and a second optical sensor, the first light hits the first optical sensor and the second optical sensor, and the second light hits the second optical sensor.

Based on the above, the side wall and the bottom wall of the main body of the detection tube of the invention jointly form the detection groove. The optical structure is connected to the bottom wall, and the first distance between the portions of the incident surface and the exit surface adjacent to the bottom wall is greater than the second distance between the portions of the incident surface and the exit surface away from the bottom wall. Such a design makes the incident surface and the exit surface incline towards each other in the direction away from the main body, thereby allowing the light of the light source of the detection system enter the optical structure from the incident surface, partially reflected by the bottom wall and then exit from the exit surface for the sensing component to detect the light exiting from the exit surface. In the optical detection method for the parameter of the test specimen of the invention, before the test specimen is filled into the detection groove, the light source emits the light to irradiate the incident surface, a portion of the light is reflected by the bottom wall and exits from the exit surface to form the first light, and the sensing component receives the first light to obtain the initial information. Then, the test specimen is filled into the detection groove, the light source emits the light to irradiate the incident surface, and a portion of the light is reflected by the bottom wall and the test specimen to form the second light exiting from the exit surface. The sensing component receives the second light to obtain the detection information. The refractive index of the test specimen can be derived from subsequent comparison of the initial information and the detection information. The optical detection method for the parameter of the test specimen of the invention does not need additional cleaning procedures, and is relatively convenient and simple in operations.

### BRIEF DESCRIPTION OF THE DRAWINGS

FIG. 1A and FIG. 1B are schematic views of different viewing angles of a detection tube according to an embodiment of the invention.
FIG. 2A and FIG. 2B are schematic views of different viewing angles of a detection tube according to another embodiment of the invention.
FIG. 3A to FIG. 3B are schematic diagrams of a detection process of a detection system according to an embodiment of the invention.
FIG. 4 is a flow chart of an optical detection method for a parameter of a test specimen according to an embodiment of the invention.
FIG. 5A to FIG. 5B are schematic diagrams of a detection process of a detection system according to another embodiment of the invention.
FIG. 6A to FIG. 6B are schematic diagrams of a detection process of a detection system according to another embodiment of the invention.
FIG. 7A to FIG. 7B are schematic diagrams of a detection process of a detection system according to another embodiment of the invention.
FIG. 8A to FIG. 8B are schematic diagrams of a detection process of a detection system according to another embodiment of the invention.
FIG. 9A is a schematic diagram of a detection system according to another embodiment of the invention.
FIG. 9B is a schematic diagram of a detection system according to another embodiment of the invention.

### DESCRIPTION OF THE EMBODIMENTS

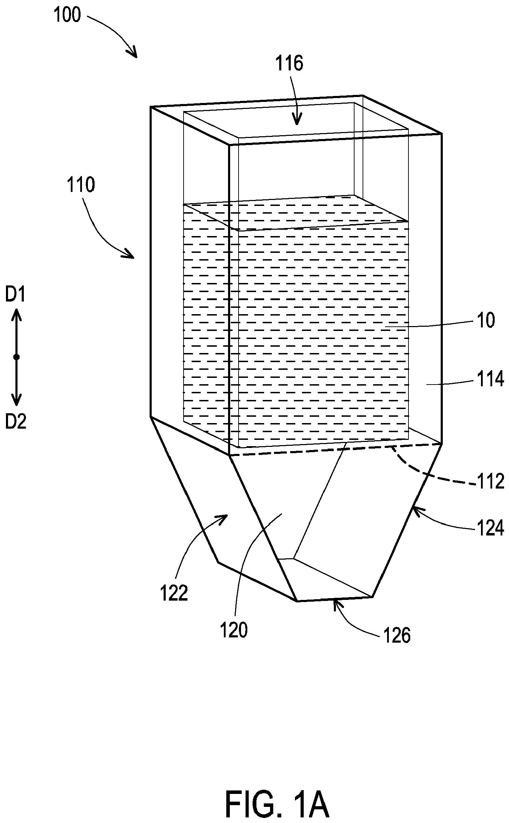

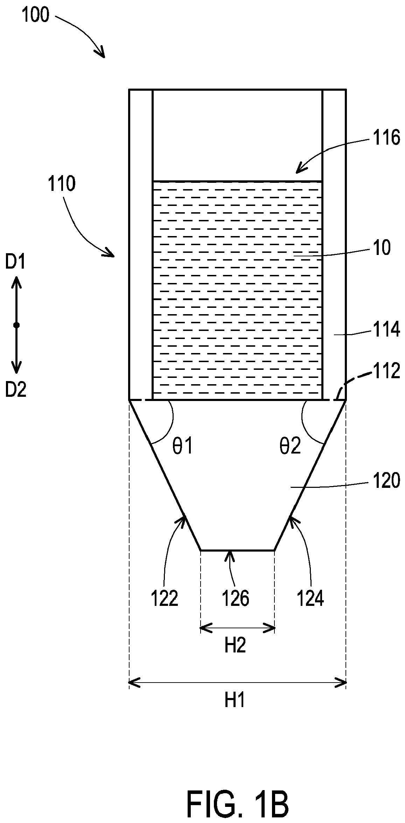

FIG. 1A and FIG. 1B are schematic views of different viewing angles of a detection tube according to an embodiment of the invention. Please refer to FIG. 1A and FIG. 1B, a detection tube 100 of the present embodiment includes a main body 110 and an optical structure 120. The main body 110 includes a bottom wall 112 and a side wall 114 extended from the periphery of the bottom wall 112 to a first direction D1, and the side wall 114 and the bottom wall 112 jointly form a detection groove 116. The detection groove 116 is used for injecting a test specimen 10 and fixing the test specimen 10 at a specific position. The test specimen 10 may be liquid-state or gas-state.

The optical structure 120 is connected to the bottom wall 112. In the present embodiment, the optical structure 120 is integrated with the main body 110. The optical structure 120 includes an incident surface 122 and an exit surface 124, and the incident surface 122 and the exit surface 124 are extended from the periphery of the bottom wall 112 to a second direction D2 which is opposite to the first direction D1.

As shown in FIG. 1B, there is a first distance H1 between portions of the incident surface 122 and the exit surface 124 adjacent to the bottom wall 112, and there is a second distance H2 between portions of the incident surface 122 and the exit surface 124 away from the bottom wall 112, and the first distance H1 is greater than the second distance H2. Such a design makes the incident surface 122 and the exit surface 124 incline toward each other (downwardly inclined) in a direction away from the main body 110 to proceed following detections. In brief, there is an included angle *θ*1 between the incident surface 122 and the bottom wall 112, and there is an included angle *θ*2 between the exit surface 124 and the bottom wall 112. In the present embodiment, the incident surface 122 and the exit surface 124 may be arranged symmetrically, so that the included angle *θ*1 is equal to the included angle *θ*2. Of course, the configuration between the incident surface 122 and the exit surface 124 and between the included angles *θ*1 and *θ*2 are not limited thereto. Preferably, the included angle *θ*1 between the incident surface 122 and the bottom wall 112 is between 64 degrees and 80 degrees, and the included angle *θ*2 between the exit surface 124 and the bottom wall 112 is between 64 degrees and 80 degrees.

In the present embodiment, the optical structure 120 further includes a connecting surface 126, and the end of the incident surface 122 and the end of the exit surface 124 which are away from the bottom wall 112 are connected by the connecting surface 126. Since the incident surface 122 and the exit surface 124 are two slopes, the optical structure 120 is, for example, a trapezoid (a trapezoidal shape from the perspective of FIG. 1B).

The optical structure 120 is a solid structure with the refractive index which is greater than 1.4. In an embodiment, the optical structure 120 has the refractive index whose range is between 1.4 and 2.5, for example. The material of the optical structure 120 may be transparent materials such as glass, PMMA (Poly(methyl methacrylate)), PS (Polystyrene), PC (Polycarbonate), PET (polyethylene terephthalate), PVC (Polyvinyl Chloride), PDMS (Polydimethylsiloxane), but the refractive index and the material of the optical structure 120 are not limited thereto.

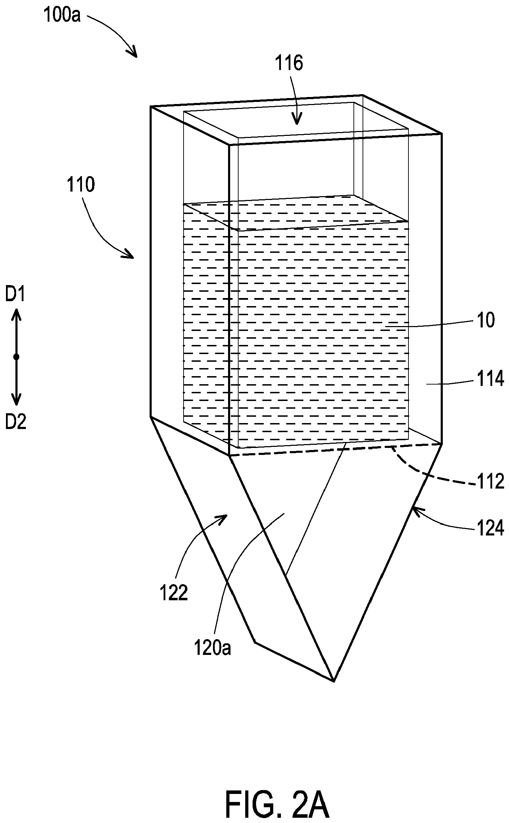

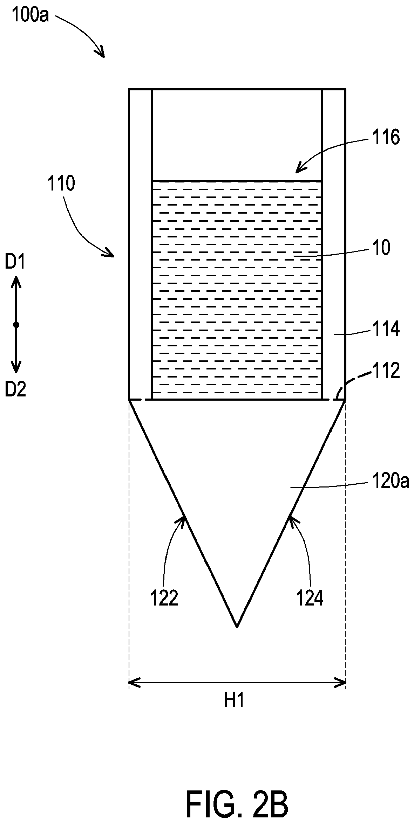

FIG. 2A and FIG. 2B are schematic views of different viewing angles of a detection tube according to another embodiment of the invention. Please refer to FIG. 2A and FIG. 2B, the main difference between a detection tube 100a of the present embodiment and the detection tube 100 of the previous embodiment is that the optical structure 120 of the present embodiment does not include the connecting surface 126. The incident surface 122 and the exit surface 124 are directly connected to each other at an end away from the bottom wall 112. That is, the end of the incident surface 122 and the end of the exit surface 124 intersect at a line, so that the shape of the optical structure 120a is a triangle-shaped column (a triangle shape from the perspective of FIG. 2B).

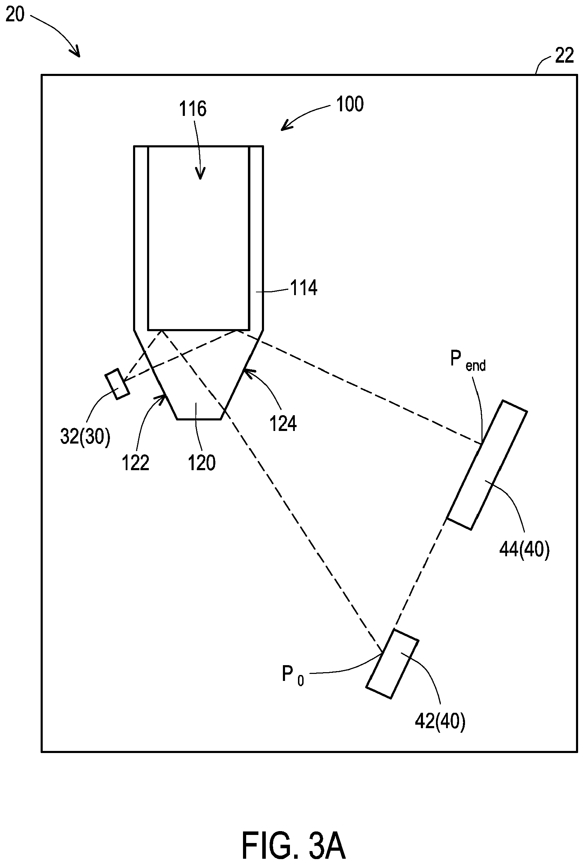

FIG. 3A to FIG. 3B are schematic diagrams of a detection process of a detection system according to an embodiment of the invention. Please refer to FIG. 3A, a detection system 20 of the present embodiment includes a housing 22, a light source 30, the detection tube 100, and a sensing component 40. The housing 22 is used to shield external light. The light source 30 is arranged in the housing 22. The sensing component 40 is arranged in the housing 22. In the present embodiment, the light source 30 is a single color light-emitting diode 32 as an example, and the wavelength of the light source 30 may be in the range between 400 nm and 800 nm, but the type and the wavelength of the light source 30 are not limited thereto. The light source 30 is arranged adjacent to and facing the incident surface 122.

In the present embodiment, the detection tube 100 of FIG. 1A is taken as an example, but the detection tube 100a of FIG. 2A may also be chosen. The detection tube is not limited to those shown in the figures. The detection tube 100 is detachably arranged in the housing 22. In the present embodiment, the detection tube 100 is a disposable type. Once the measuring process of the test specimen 10 is completed, the used detection tube 100 with the test specimen 10 may be directly removed from the housing 22 and discarded. Afterwards, a new detection tube 100 may be arranged again into the housing 22 for the next detection.

The sensing component 40 is arranged adjacent to the exit surface 124 to receive light emitted from the exit surface 124. In the present embodiment, the sensing component 40 includes a first optical sensor 42 and a second optical sensor 44. The first optical sensor 42 and the second optical sensor 44 are separately arranged at a same line on a same plane.

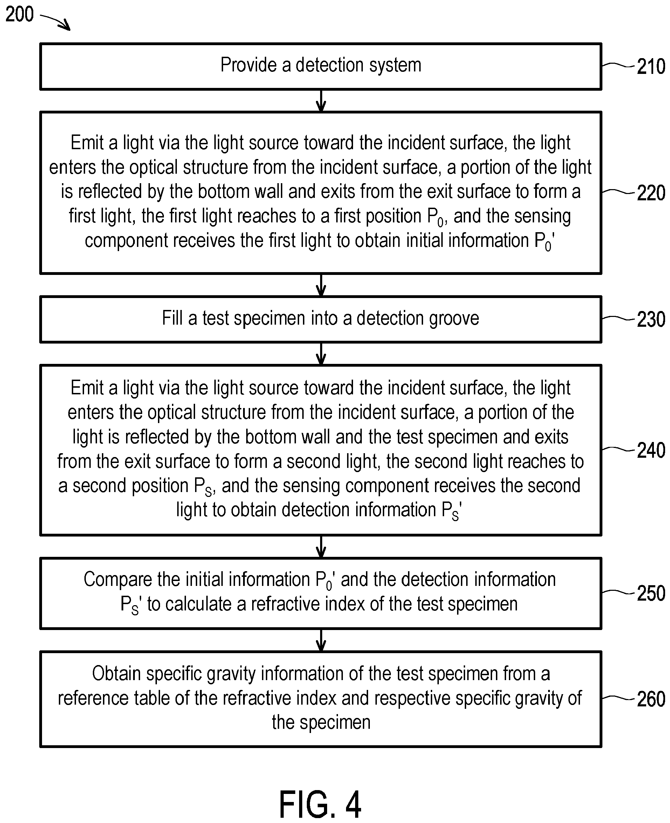

An optical detection method 200 for detecting a parameter of a test specimen by using the detection system 20 is described below. FIG. 4 is a flow chart of an optical detection method for a parameter of a test specimen according to an embodiment of the invention. Please refer to FIG. 3A and FIG. 4 at the same time. The optical detection method 200 for the parameter of the test specimen of the present embodiment may detect a parameter of a gas-state or a liquid-state medium, and the parameter is, for example, specific gravity, but not limited thereto. The optical detection method 200 for the parameter of the test specimen includes the following steps. First, as shown in step 210, the detection system 20 as shown in FIG. 3A is provided.

Next, as shown in step 220, the light emitted by the light source 30 enters the optical structure 120 by hitting the incident surface 122. When the light hits the interface of the bottom wall 112 and air in the detection groove 116, a portion of the light is reflected because of TIR (Total Internal Reflection) phenomenon and exits from the exit surface 124 as a first light. The range of the lighting area of the first light includes a first position P₀ to an end position P_{end}, and the sensing component 40 receives the first light to acquire initial information P₀'.

In the present embodiment, the first optical sensor 42 and the second optical sensor 44 may receive the signals of the first light, and based on this information, the critical angle of TIR to the interface between the bottom wall 112 of the detection tube 100 and the air in the detection groove 116 can be calculated before filling the test specimen 10 into the detection groove 116. In brief, the first optical sensor 42 and the second optical sensor 44 may be placed near the edges of the range (that is, the first position P₀ to the end position P_{end}) of the first light generated before the detection groove 116 is filled with the test specimen 10, so as to jointly identify the range of the first light. Alternatively, the sensing component 40 needs to at least sense the first position P₀ to acquire the initial information P₀'.

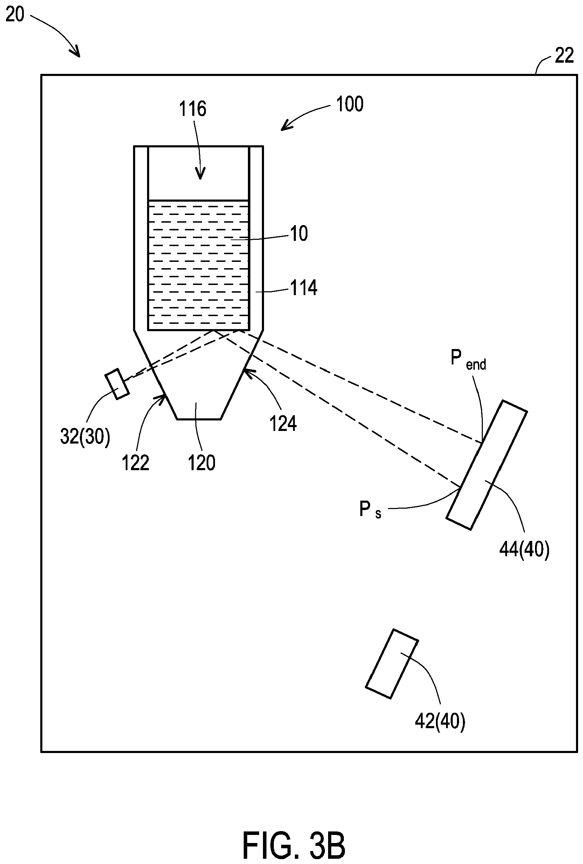

Next, please refer to FIG. 3B and FIG. 4, as in step 230, the test specimen 10 is filled into the detection groove 116. In this step, the test specimen 10 may be injected automatically by a robotic arm or manually by hand.

Next, as shown in step 240, the light emitted by the light source 30 enters the optical structure 120 by hitting the incident surface 122. When the light hits the interface of the bottom wall 112 and the test specimen 10, a portion of the light is reflected because of TIR phenomenon and exits from the exit surface 124 as a second light. The range of lighting area of the second light includes a second position Pₛ to the end position P_{end}, and the sensing component 40 receives the second light to acquire the detection information Pₛ'. Alternatively, the sensing component 40 needs to at least sense the second position Pₛ to acquire the detection information Pₛ'.

Specifically, the initial information P₀' includes at least the information of the first position P₀, and the detection information Pₛ' includes at least the information of the second position Pₛ. The initial information P₀' and the detection information Pₛ' are, for example, information such as a boundary position of light from bright to dark or a moving position on the default brightness pathway, which are not limited here. In other embodiments, the initial information and the detection information may optionally include information to the end position P_{end}.

In the present embodiment, the critical angle which determines whether TIR phenomenon occurs, is decided by the refraction index condition of the interface between the bottom wall 112 and the medium in the detection groove 116. Since the refractive index of the test specimen 10 is different from the refractive index of air (when the detection groove 116 is not filled with test specimen), the critical angles for TIR phenomenon to occur in these situations are also different. Therefore, the range of the second light resulted by TIR with filled specimen is different from the first light resulted by TIR with no specimen filled. As shown in FIG. 3B, the lighting area of the second light only hits to the second optical sensor 44.

Next, as in step 250, the initial information P₀' and the detection information Pₛ' are compared to calculate the refractive index of the test specimen 10.

Theoretically, the optical detection method 200 for the parameter of the test specimen of the present embodiment utilizes the principle of TIR (Total Internal Reflection) to acquire the refractive index. TIR is a phenomenon that occurs when light arrives at the interface (boundary) of two mediums from medium of higher to lower refractive index and when the incident angle of light to the boundary is larger than the critical angle. In such condition, the light is not refracted but completely reflected. On the contrary, when the incident angle of the light is less than the critical angle, the light is not completely reflected. The critical angle is the largest possible angle of incidence which refraction could occur and is defined by the refractive index values of the two mediums the light passes (such as the bottom wall 112 versus air and the bottom wall 112 versus the test specimen 10). Therefore, when the bottom wall versus different mediums with different refractive index (such as air and the specimen 10), the critical angles of each condition are different. In practical applications, such as urine, different concentration of urine has different urine specific gravities and different refractive index, and the refractive index has positive relationship with the urine specific gravity. When the refractive index is changed, the critical angle of TIR is also changed, and the refractive index of the test material may be calculated by detecting the reflected light position.

Lastly, as in step 260, according to the refractive index of the test specimen 10, the specific gravity information of the test specimen is obtained from a reference table of refractive index with respective specific gravity. In the present embodiment, the detection tube 100 may be used to detect the test specimen 10 with a refractive index range from 1 to 1.38 and a specific gravity range from 1 to 1.2, but is not limited thereto.

In the optical detection method 200 for the parameter of the test specimen of the present embodiment, after the detection tube 100 is used for one detection, the used detection tube 100 may be discarded directly and replaced with a new detection tube 100. The detection tube 100 may sense the light at the beginning before the test specimen 10 is injected, and the detection result is the comparison of the light detections before and after injecting the test specimen 10 into the detection tube 100, and the step of injecting pure water or standard references may be omitted. Therefore, there is no additional cleaning procedures needed, and the operations become much more convenient and simpler.

Other detection systems are introduced below. The same or similar content in the following embodiments and the embodiment of FIG. 3A are represented by the same or similar reference numerals and are not repeated. The following mainly describes the main differences.

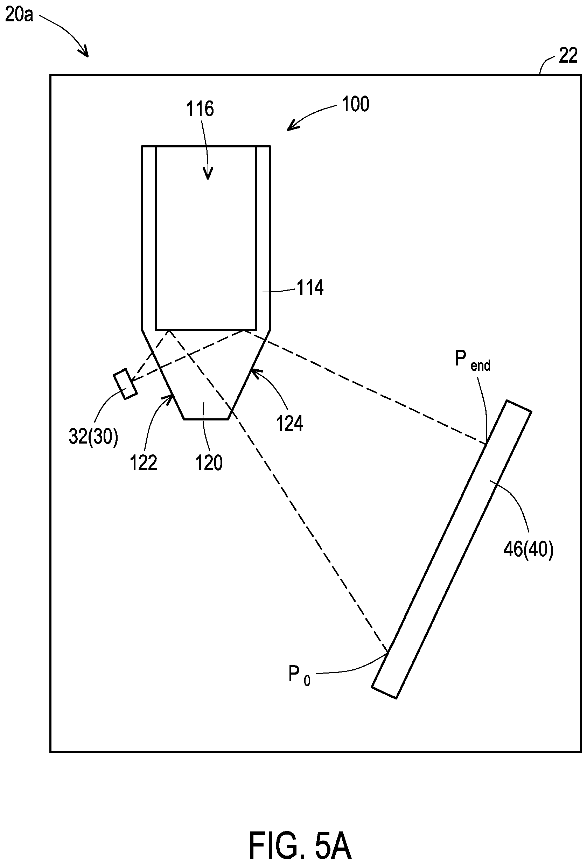

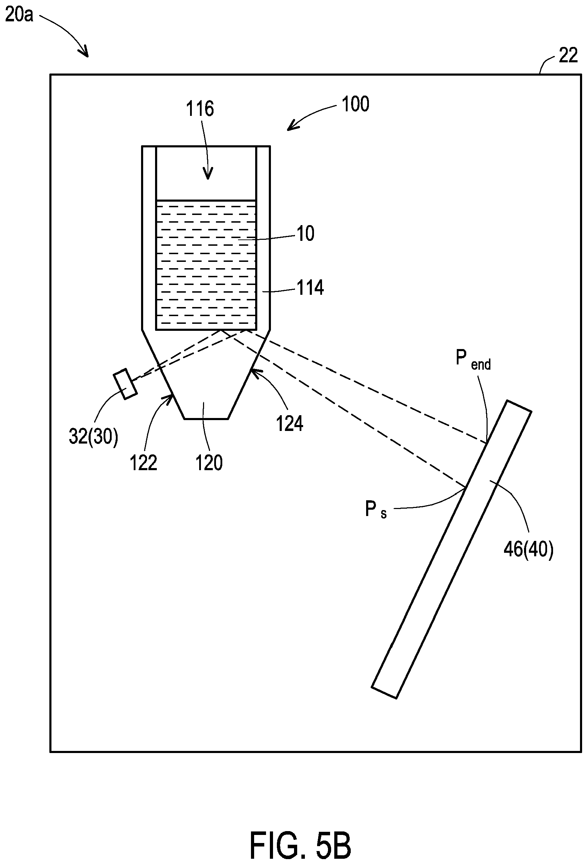

FIG. 5A to FIG. 5B are schematic diagrams of a detection process of a detection system according to another embodiment of the invention. Please refer to FIG. 5A to FIG. 5B, the main difference between a detection system 20a of the present embodiment and the detection system 20 of FIG. 3A is that, in the present embodiment, the sensing component 40 is a fixed sensor 46, the range of the sensor 46 covers the sensing area of the first optical sensor 42 and the sensing area of the second optical sensor 44 of FIG. 3A, and the lighting area of the first light (for example, from the position P₀ to the position P_{end}) may be received from a photosensitive chip on the single sensor 46 to acquire the initial information P₀', and the lighting area of the second light (for example, from the position Pₛ to the position P_{end}) is received to acquire the detection information Pₛ'. In another way, the sensor 46 needs to at least sense the first position P₀ of the first light to acquire the initial information P₀', and at least sense the second position Pₛ of the second light to acquire the detection information Pₛ'.

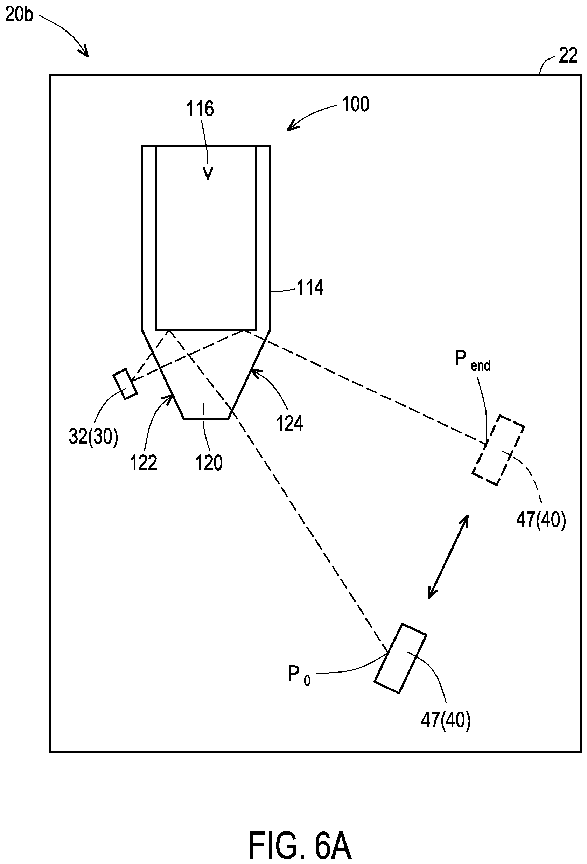

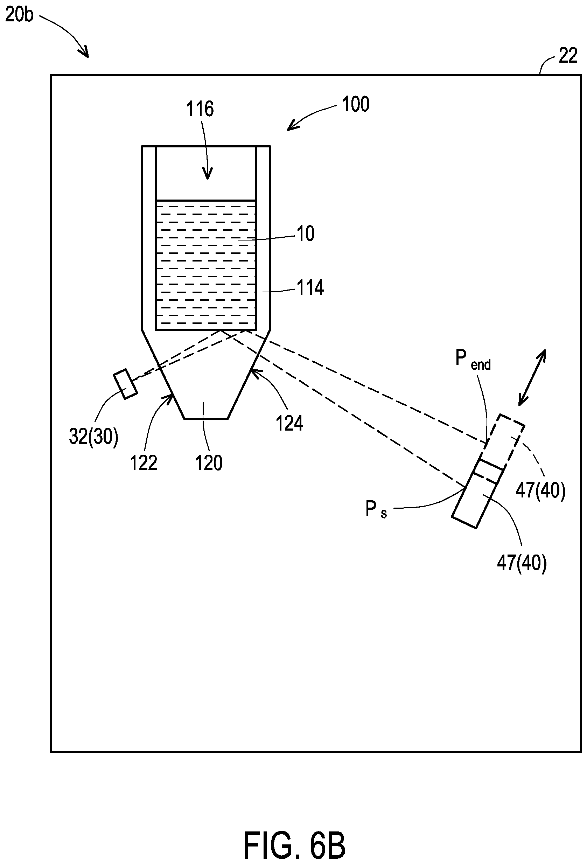

FIG. 6A to FIG. 6B are schematic diagrams of a detection process of a detection system according to another embodiment of the invention. Please refer to FIG. 6A to FIG. 6B, a detection system 20b of the present embodiment is similar to the detection system 20a of FIG. 5A in that each of them has only a single sensor 47 or 46, but the main difference is that in the present embodiment, the sensing component 40 is a movable sensor 47. Since the sensor 47 is movable, the sensor 47 itself does not need to cover as large as the sensing area of the sensor 46 in FIG. 5A which covers the sensing area of the first optical sensor 42 and the sensing area of the second optical sensor 44 as shown in FIG. 3A. The sensor 47 may move to any location of the sensing area of the first optical sensor 42 and any location of the sensing area of the second optical sensor 44 of FIG. 3A to receive the first light (for example, from the position P₀ to the position P_{end}) to acquire the initial information P₀' and to receive the second light (for example, from the position Pₛ to the position P_{end}) to acquire the detection information Pₛ'. In another way, the sensor 47 needs to at least sense the first position P₀ of the first light to acquire the initial information P₀', and at least sense the second position Pₛ of the second light to acquire the detection information Pₛ'.

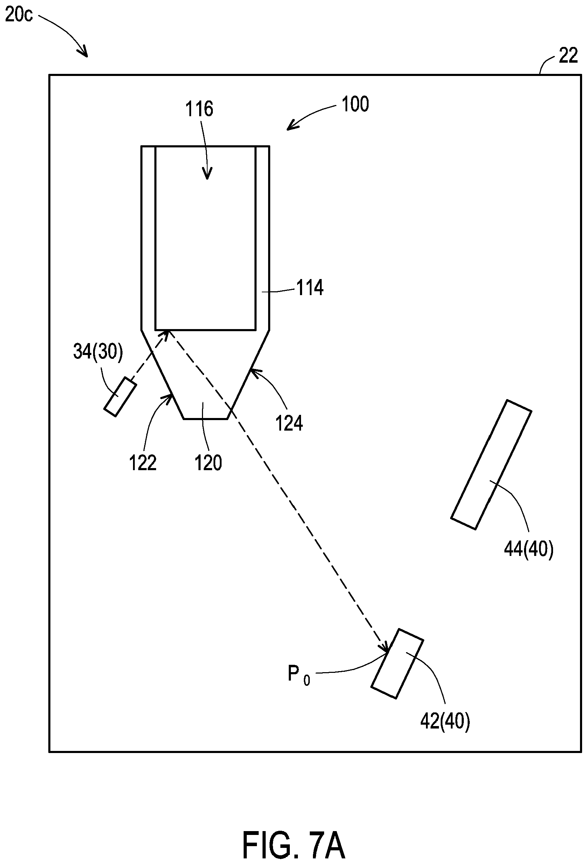

FIG. 7A to FIG. 7B are schematic diagrams of a detection process of a detection system according to another embodiment of the invention. Referring to FIG. 7A to FIG. 7B, the main difference between a detection system 20c of the present embodiment and the detection system 20 of FIG. 3A is that, in the present embodiment, the light source 30 is a laser light source 34. The light emitted by the laser light source 34 has good directionality and extremely narrow laser beam, so the incident light and the reflected light can be concentrated in a small area instead of a large area as shown by the light of FIG. 3A.

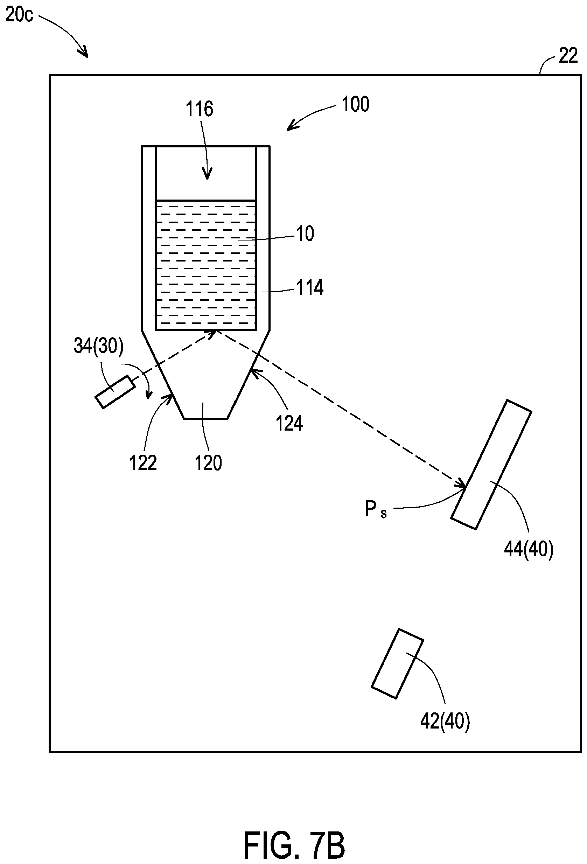

In the present embodiment, as shown in FIG. 7A to FIG. 7B, the laser light source 34 is rotatably disposed at the housing 22. As shown in FIG. 7A, when the test specimen 10 is not filled in the detection groove 116, the reflected first light hits the first optical sensor 42, and the first optical sensor 42 may receive the first light (the first position P₀) to obtain the initial information P₀'. As shown in FIG. 7B, when the test specimen 10 is filled in the detection groove 116, the reflected second light hits the second optical sensor 44, and the second optical sensor 44 may receive the second light (the second position Pₛ) to obtain the detection information Pₛ'.

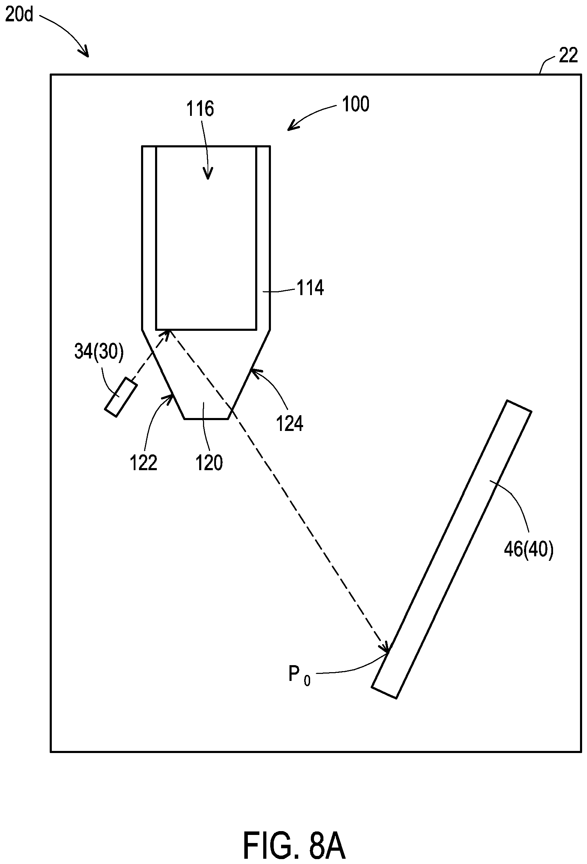

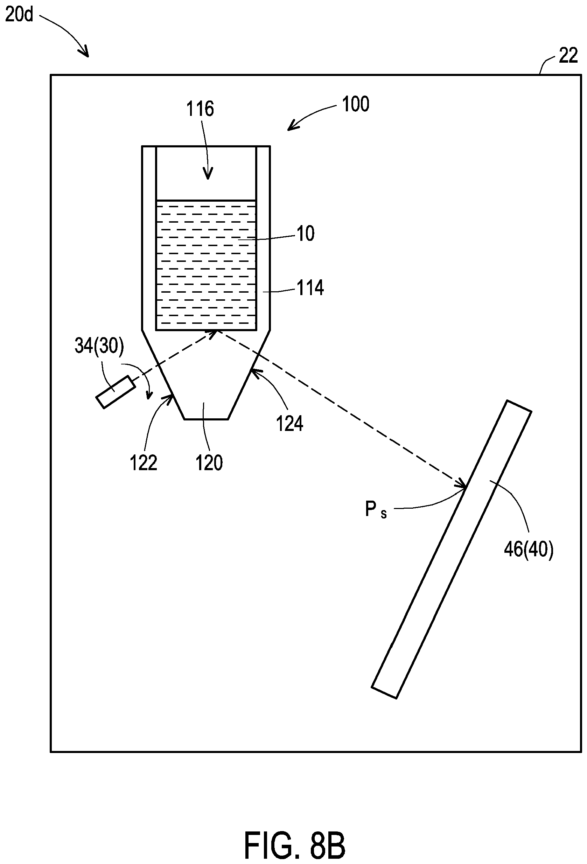

FIG. 8A to FIG. 8B are schematic diagrams of a detection process of a detection system according to another embodiment of the invention. Please refer to FIG. 8A to FIG. 8B, the main difference between a detection system 20d of the present embodiment and the detection system 20c of FIG. 7A is that, in the present embodiment, the sensing component 40 is a fixed sensor 46, the sensing area of the sensor 46 covers the sensing area of the first optical sensor 42 and sensing area of the second optical sensor 44 of FIG. 7A, and the first light (the first the position P₀) may be received by the fixed sensor 46 to obtain the initial information P₀', and the second light (the second position Pₛ) is received to obtain the detection information Pₛ'.

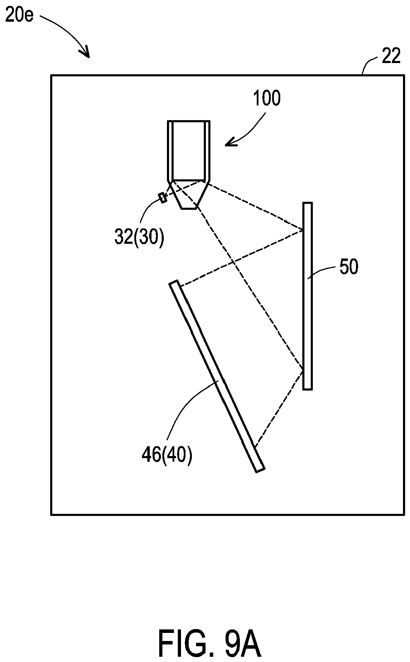

FIG. 9A is a schematic diagram of a detection system according to another embodiment of the invention. Please refer to FIG. 9A, the main difference between a detection system 20e of the present embodiment and the detection system 20a of FIG. 5A is that, in the present embodiment, the detection system 20e further includes a reflecting mirror 50 arranged on the light path of TIR between the exit surface 124 and the sensing component 40 to change the direction of the light, and the sensing component 40 receives the light exiting from the exit surface 124 via the reflecting mirror 50.

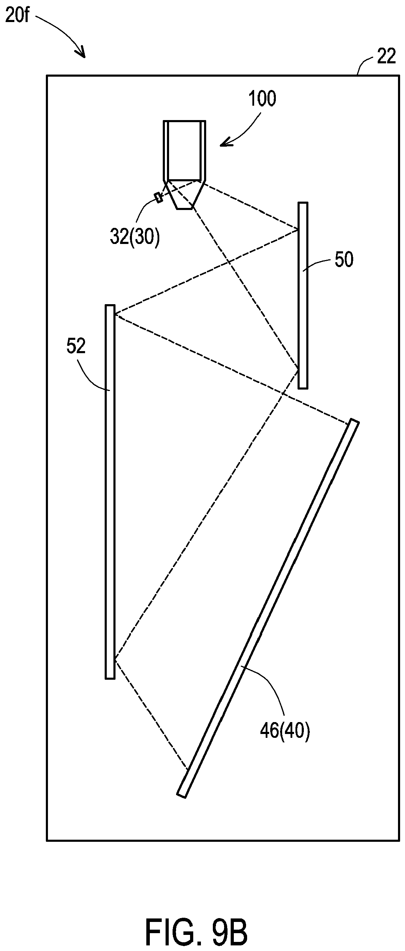

FIG. 9B is a schematic diagram of a detection system according to another embodiment of the invention. Please refer to FIG. 9B, the main difference between a detection system 20f of the present embodiment and the detection system 20e of FIG. 9A is in the number of reflecting mirrors. In the present embodiment, the detection system 20 includes multiple reflecting mirrors 50 and 52, the reflected light is first reflected by the reflecting mirror 50 and then reflected by the reflecting mirror 52, and then hits the sensing component 40. The designer may adjust the number and the position of the reflecting mirror according to needs, which are not limited to the figure.

In conclusion, the side wall and the bottom wall of the main body of the detection tube of the invention jointly form the detection groove. The optical structure is connected to the bottom wall, and the first distance between the portions of the incident surface and the exit surface adjacent to the bottom wall is greater than the second distance between the portions of the incident surface and the exit surface away from the bottom wall. Such a design makes the incident surface and the exit surface incline towards each other in the direction away from the main body, thereby allowing the light of the light source of the detection system enter the optical structure from the incident surface, partially reflected by the bottom wall and then exit from the exit surface for the sensing component to detect the light exiting from the exit surface. In the optical detection method for the parameter of the test specimen of the invention, before the test specimen is filled into the detection groove, the light source emits the light to irradiate the incident surface, a portion of the light is reflected by the bottom wall and exits from the exit surface to form the first light, and the sensing component receives the first light to obtain the initial information. Then, the test specimen is filled into the detection groove, the light source emits the light to irradiate the incident surface, and a portion of the light is reflected by the bottom wall and the test specimen to form the second light exiting from the exit surface. The sensing component receives the second light to obtain the detection information. The refractive index of the test specimen can be derived from subsequent comparison of the initial information and the detection information. The optical detection method for the parameter of the test specimen of the invention does not need additional cleaning procedures, and is relatively convenient and simple in operations.

## Claims

1. A detection tube (100, 100a), comprising:
a main body (110) comprising a bottom wall (112) and a side wall (114) extending from a periphery of the bottom wall (112) to a first direction (D1), and the side wall (114) and the bottom wall (112) jointly form a detection groove (116); and
an optical structure (120, 120a) connected to the bottom wall (112), the optical structure (120, 120a) comprises an incident surface (122) and an exit surface (124), the incident surface (122) and the exit surface (124) are extended from the periphery of the bottom wall (112) to a second direction (D2) opposite to the first direction (D1), there is a first distance (H1) between portions of the incident surface (122) and the exit surface (124) adjacent to the bottom wall (112), there is a second distance (H2) between portions of the incident surface (122) and the exit surface (124) away from the bottom wall (112), and the first distance (H1) is greater than the second distance (H2).

2. The detection tube (100, 100a) of claim 1, wherein an included angle (*θ*1, *θ*2) between the incident surface (122) and the bottom wall (112) or between the exit surface (124) and the bottom wall (112) is between 64 degrees and 80 degrees.

3. The detection tube (100, 100a) of claim 1, wherein the optical structure (120, 120a) is solid and a refractive index thereof is greater than 1.4.

4. The detection tube (100, 100a) of claim 1, wherein the optical structure (120, 120a) further comprises a connecting surface (126), and the connecting surface (126) connects the incident surface (122) and the exit surface (124) at their ends away from the bottom wall (112).

5. A detection system (20, 20a, 20b, 20c, 20d, 20e, 20f), comprising:
a housing (22) shielding external light;
a light source (30) arranged in the housing (22);
a detection tube (100, 100a) detachably disposed in the housing (22) and comprising:
a main body (110) comprising a bottom wall (112) and a side wall (114) extending from a periphery of the bottom wall (112) to a first direction (D1), and the side wall (114) and the bottom wall (112) jointly form a detection groove (116); and
an optical structure (120, 120a) connected to the bottom wall (112), the optical structure (120, 120a) comprises an incident surface (122) and an exit surface (124), the incident surface (122) and the exit surface (124) are extended from the periphery of the bottom wall (112) to a second direction (D2) opposite to the first direction (D1), there is a first distance (H1) between portions of the incident surface (122) and the exit surface (124) adjacent to the bottom wall (112), there is a second distance (H2) between portions of the incident surface (122) and the exit surface (124) away from the bottom wall (112), and the first distance (H1) is greater than the second distance (H2); and
a sensing component (40) arranged in the housing (22) and arranged adjacent to the exit surface (124) to receive a light exiting from the exit surface (124);
wherein the light source (30) is arranged adjacent to the incident surface (122).

6. The detection system (20, 20a, 20b, 20c, 20d, 20e, 20f) of claim 5, wherein the sensing component (40) is a fixed sensor (46) or a movable sensor (47) or comprises a first optical sensor (42) and a second optical sensor (44).

7. The detection system (20, 20a, 20b, 20c, 20d, 20e, 20f) of claim 5, wherein the light source (30) comprises a light-emitting diode (32) or a laser light source (34).

8. The detection system (20, 20a, 20b, 20c, 20d, 20e, 20f) of claim 5, further comprising:
a reflecting mirror (50, 52), and the sensing component (40) receives the light exiting from the exit surface (124) via the reflecting mirror (50, 52).

9. An optical detection method (200) for a parameter of a test specimen (10), comprising:
providing a detection system (20, 20a, 20b, 20c, 20d, 20e, 20f) of claim 5;
emitting a light via the light source (30) toward the incident surface (122), wherein the light enters the optical structure (120, 120a) from the incident surface (122), a portion of the light is reflected by the bottom wall (112) and exits from the exit surface (124) to form a first light, the first light reaches to a first position (P₀), and the sensing component (40) receives the first light to obtain initial information (P₀');
filling a test specimen (10) into the detection groove (116);
emitting a light via the light source (30) toward the incident surface (122), wherein the light enters the optical structure (120, 120a) from the incident surface (122), a portion of the light is reflected by the bottom wall (112) and the test specimen (10) and exits from the exit surface (124) to form a second light, the second light reaches to a second position (Ps), and the sensing component (40) receives the second light to obtain detection information (Ps'); and
comparing the initial information (P₀') and the detection information (Ps') to calculate refractive index of the test specimen (10).

10. The optical detection method (200) for the parameter of the test specimen (10) of claim 9, further comprising:
obtaining specific gravity information of the test specimen (10) from a reference table of the refractive index and respective specific gravity of the test specimen (10).

11. The optical detection method (200) for the parameter of the test specimen (10) of claim 9, wherein the sensing component (40) comprises a first optical sensor (42) and a second optical sensor (44), the first light hits the first optical sensor (42) and the second optical sensor (44), and the second light hits the second optical sensor (44).
